(19) Europäisches Patentamt / European Patent Office / Office européen des brevets

(11) **EP 4 275 177 B1**

(12) **EUROPEAN PATENT SPECIFICATION**

(45) Date of publication and mention
of the grant of the patent:
**31.12.2025  Bulletin 2026/01**

(21) Application number: **22899250.9**

(22) Date of filing: **22.07.2022**

(51) International Patent Classification (IPC):
**G06T 13/60** (2011.01)  **G06F 30/25** (2020.01)
**G06F 30/28** (2020.01)

(52) Cooperative Patent Classification (CPC):
**G06T 13/60;** G06T 2210/24; G06T 2210/56

(86) International application number:
**PCT/US2022/038009**

(87) International publication number:
**WO 2023/096676 (01.06.2023 Gazette 2023/22)**

(54) **SYSTEMS AND METHODS OF SIMULATING DRAG-INDUCED MULTISCALE PHENOMENA**

SYSTEME UND VERFAHREN ZUR SIMULATION VON STRÖMUNGSINDUZIERTEN MULTISKALENPHÄNOMENEN

SYSTÈMES ET PROCÉDÉS DE SIMULATION DE PHÉNOMÈNES À ÉCHELLES MULTIPLES INDUITS PAR TRAÎNÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.11.2021   US 202117537230**

(43) Date of publication of application:
**15.11.2023   Bulletin 2023/46**

(73) Proprietor: **Tencent America LLC
Palo Alto, CA 94306 (US)**

(72) Inventors:
• **CHEN, Yichen
Palo Alto, CA 94306 (US)**
• **GUO, Qi
Palo Alto, CA 94306 (US)**

(74) Representative: **Novagraaf International SA
Chemin de l'Echo 3
1213 Onex, Geneva (CH)**

(56) References cited:
**US-A1- 2010 185 420     US-A1- 2020 082 589
US-B1- 8 878 856**

• **JING L ET AL: "Extended CFD-DEM for free-surface flow with multi-size granules",
INTERNATIONAL JOURNAL FOR NUMERICAL AND ANALYTICAL METHODS INGEOMECHANICS, JOHN WILEY & SONS LTD., HOBOKEN, NJ, GB, vol. 40, no. 1, 22 May 2015 (2015-05-22), pages 62 - 79, XP071642783, ISSN: 0363-9061, DOI: 10.1002/NAG.2387**

**Description**

TECHNICAL FIELD

The present disclosure relates generally to image technologies, and in particular, to image processing of drag induced multiscale phenomena methods and systems.

BACKGROUND

In computer graphics, there is very few existing work on the single framework of simulation of multiscale mixed-motion avalanche and waterfall. Artists usually achieve the plausible visual effects of avalanches by only simulating smoke with specific rendering and lighting techniques, without considering the mixed motion of snow and snow smoke. For waterfall, the related work is also rare.

Artistic methods of simulating avalanche with only smoke simulation have severe defects. First, without being induced by physics-based elastoplasticity model of snow dynamics, the pure snow smoke simulation has trouble in replicating the accumulation and decaying of snow smoke based on the existing snow. Thus, the important details of phase transition are missing, making the simulation look like a cloud instead of real massive-scale snow movements. Secondly, without coupling the dynamics of both snow and snow smoke, the avalanche dynamics are only dominated by the Navier-Stokes equation, boundary condition, buoyancy, and other forces. As a result, the movements of snow and smoke are entirely independent, which causes severe visual artifacts, for instance, the declining speed of snow is much faster than snow smoke, or vice versa.

US8878856B1 discloses a method for depicting a body of water utilizing a height field and particles.

SUMMARY

To overcome the defects or disadvantages of the above-mentioned methods, improved systems and methods of simulating drag-induced multiscale phenomena are needed, for example, for avalanche or waterfall.

In computer graphics, simulation of multiscale mixed-motion phenomena such as avalanches, misty waterfalls, and landslide is an important and challenging research area. The simulation of these phenomena has a broad application to create impressive special effects of games and films.

In the present disclosure, systems and methods are implemented to simulate avalanches numerically in a unified computational framework by taking advantage of the power of, for example, the Material Point Method (MPM) and the advection-projection method. In some embodiments, the elastoplastic media are simulated by using MPM to achieve high fidelity and the fluid is simulated by following the advection-projection method. Additionally, based on the physical rules of saltation/atomization of the elastoplastic media, a novel algorithm is also implemented to transit fluid-like motions (e.g., the snow smoke of avalanche, the mist of a waterfall, dust of landslide, etc.) between the elastoplastic media, and couple the dynamics of the elastoplastic media with the generated fluid-like layer using an adjustable sub-stepping scheme. In some embodiments, realistic visual results are created with a novel computational scheme by harnessing the power of Graphics Processing Unit (GPU) and sparse data structure.

According to a first aspect of the present application, a method of rendering visual effect of avalanche of media is provided as defined in claim 1.

According to a second aspect of the present application, an electronic apparatus is provided as defined in claim 11.

According to a third aspect of the present application, a non-transitory computer readable storage medium is provided as defined in claim 12.

Note that the various embodiments described above can be combined with any other embodiments described herein. The features and advantages described in the specification are not all inclusive and, in particular, many additional features and advantages will be apparent to one of ordinary skill in the art in view of the drawings, specification, and claims. Moreover, it should be noted that the language used in the specification has been principally selected for readability and instructional purposes, and may not have been selected to delineate or circumscribe the inventive subject matter.

BRIEF DESCRIPTION OF THE DRAWINGS

So that the present disclosure can be understood in greater detail, a more particular description may be had by reference to the features of various embodiments, some of which are illustrated in the appended drawings. The appended drawings, however, merely illustrate pertinent features of the present disclosure and are therefore not to be considered limiting, for the description may admit to other effective features.

Figure 1 illustrates the workflow of a multiscale time stepping method for simulating avalanche of elastoplastic media, in accordance with some implementations of the present disclosure.

Figure 2 illustrates simulation result comparison reflecting the advantages of the saltation fluid generation scheme, in accordance with some implementations of the present disclosure.

Figure 3 illustrates simulation result comparison reflecting the advantages of the fluid-decaying scheme, in accordance with some implementations of the present disclosure.

Figure 4 illustrates simulation result comparison reflecting the advantages of the coupling scheme, in accordance with some implementations of the present disclosure.

Figure 5 illustrates simulation result of waterfall effects modeled using the multiscale approach discussed in Figure 1, in accordance with some implementations of the present disclosure.

Figure 6 is a block diagram illustrating an exemplary process of simulating visual effect of avalanche of media in accordance with some implementations of the present disclosure.

Figure 7 is a schematic diagram of an exemplary hardware structure of an image processing apparatus in accordance with some implementations of the present disclosure.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

DETAILED DESCRIPTION

Reference will now be made in detail to specific implementations, examples of which are illustrated in the accompanying drawings. In the following detailed description, numerous non-limiting specific details are set forth in order to assist in understanding the subject matter presented herein. But it will be apparent to one of ordinary skill in the art that various alternatives may be used without departing from the scope of claims and the subject matter may be practiced without these specific details. For example, it will be apparent to one of ordinary skill in the art that the subject matter presented herein can be implemented on many types of electronic devices.

Before the embodiments of the present application are further described in detail, names and terms involved in the embodiments of the present application are described, and the names and terms involved in the embodiments of the present application have the following explanations.

Time step: small steps used for advancing in real time to compute the solution for an unsteady flow problem where the properties of the flow vary with time. The time between each iterative solve is specified, for instance, the solver will start doing the solution in the specified time intervals and will continue until the specified final time. Time step is the incremental change in time for solving the governing equations while time interval is the period of time elapsing while the phenomenon is happening.

MPM: Material Point Method is a simulation method of material movement and deformation including the following steps: Particle to grid transfer (P2G); Grid velocities computation; Degrees of freedom Identification; Grid forces computing; Grid velocity updating; Particle deformation gradient; Grid to particle transfer (G2P); Particle advection; Grid resetting; and Repeating the above processes.

Elastoplasticity: the stress state of exhibiting both elastic and plastic properties, typically as a result of being stretched beyond an elastic limit of a material.

Sparse data structure: a data structure that stores only non-zero values assuming the rest of the values are zeros. In some instances, most of the values within the data structure are zeros. That approach saves memory and computing time.

Some prior methods of simulating avalanche have several defects. For example, artistic methods of simulating avalanche with only smoke simulation have severe disadvantages.

In another simulation method, during the generation of the snow smoke, the method follows an experience-based formula, which is not physically correct and has faulty units. Furthermore, that method only uses the body forces to couple the snow and snow smoke, without direct momentum exchange between different layers. In addition, coupling body forces are not physically accurate as explicit two-way momentum exchange scheme, which possibly cause the loss of visual details of massive-scale avalanches. Additionally, when simulating snow, the model used in the simulation does not follow the rigorous elastoplasticity model based on soil mechanics. The realistic snow motion can hardly be created without accurate models. Finally, that method is only implemented on the Central Processing Unit (CPU) and is slow in terms of computational cost.

Another approach for simulating water with spray/droplets also has defects. That method does not address the explicit two-way coupling with momentum exchange among water and spray/droplets. Additionally, the method uses a semi-Lagrangian scheme to advent the spray quantities, which would create severe numerical viscosity and energy dissipation.

In some embodiments, the multiscale mixed-motion avalanche is mainly considered as being composed of snow and snow smoke. The multiscale mixed-motion waterfall is mainly considered as being composed of liquid and droplet/spray.

In some embodiments, systems and methods are implemented to automate the generation of the entire multiscale effects, such as avalanches and waterfalls.

In some embodiments, systems and methods disclosed herein provide a unified framework to simulate multiple multiscale effects utilizing the modern MPM framework and advection-projection method.

In some embodiments, systems and methods disclosed herein is based on a physically sound assumption of transition (e.g., saltation process, droplet atomization) among elastoplastic media and drag-induced smoke/spray.

In some embodiments, systems and methods disclosed herein enable a two-way coupling with direct momentum exchange among the elastoplastic media and the drag-induced smoke/spray.

In some embodiments, systems and methods disclosed herein are highly parallelizable on either CPU or GPU.

In some embodiments, systems and methods disclosed herein can serve as an efficient tool to generate visually plausible effects for multiscale mixed-motion phenomena utilizing the MPM solver and advection-projection fluid solver. Notably, the systems and methods can be used to create multiscale mixed-motion avalanche, or waterfall in visual effects in one single framework.

In some embodiments, systems and methods disclosed herein provides the features including the transition (e.g., snow to snow smoke, liquid to spray, etc.) and the sub-stepped two-way coupled dynamics between different substances.

For the single-substance simulation, the systems and methods disclosed herein provide a high-fidelity simulation.

In some embodiments, systems and methods disclosed herein are based on the physically correct constitutive models and latest MPM techniques for simulating snow and weakly-compressible liquid.

In some embodiments, systems and methods disclosed herein utilize the advection-project scheme with a matrix-free geometric-multigrid-preconditioned conjugate gradient (GMGPCG) solver, MarCormack advection, and advection-reflection scheme for simulating smoke or spray.

Due to a physically sound criterion for the transition of substances (e.g., saltation, droplet atomization), the systems and methods disclosed herein can create a subtle simulation of multiscale mixed-motion phenomena with physically sound assumptions.

In some embodiments, the implementation disclosed herein is based on GPU, ensuring faster computation efficacy than traditional CPU implementations.

In some embodiments, the implementation disclosed herein is built on the sparse data structure, which enables a much more efficient memory usage and therefore this tool allows the users to conduct simulations on a much larger scale than some previous methods.

In some embodiments of the system and method disclosed herein, avalanche snow and waterfall are both modeled as elastoplastic media, which are discretized by the Material Point Method (MPM), which is a hybrid Lagrangian/Eulerian method. MPM is a numerical algorithm to simulate how materials move and deform. MPM particles are not individual particles, but a continuous piece of material, or a subset of the whole simulated material domain. Lagrangian is a mesh-based method or a particle based method by putting a mesh over an object and track the properties and movement of each particle in the mesh. MPM is Lagrangian in the sense that actual particles of material are tracked in a mesh, for example, the properties including mass, velocity, volume, and position for a collection of material particles are tracked. In addition, all stress based forces are computed on the Eulerian grid, and the material state has to be transferred to the Eulerian configuration to incorporate the effects of material forces. Eulerian is a grid based method by superimposing a fixed grid on an object and as the object moves, what happens in a particular cell of the grid is tracked. Then, these effects are transferred back to the material particles and moved in the normal Lagrangian way. The introduction of Lagrangian method makes advection trivial compared to pure Eulerian methods (such as grid-based fluid simulation).

MPM is a hybrid method of Lagrangian and Eulerian by treating the object as a collection of particles at some points and as a grid at other points. MPM solves the controlling equation on a background of Eulerian grid. In some instances, the grid can be destroyed after each solve and reinitialized in the beginning of the next time step. The grid is just a temporary place holder that's used for calculations and gets wiped clean each time step. The particles store their individual properties including position, mass, volume, velocity, etc. The particles' information is transferred to the grid when computing how the particles would move in the next time period $\Delta t$. The grid incorporates all of the particles and computes the new velocities by performing gradient calculations. In MPM, each time the particle velocities are transferred to the grid, the grid has to perform both grid interpolation, for example, mapping particles to the grid according to weight functions, and gradient calculations based on the weight functions to determine how the particles would move. The new velocities are transferred back to the particles and the particles are advected, for example, the particles move to their next new positions and the process repeats. In each time step of MPM, particles transfer their mass and momentum to the grid nodes. In some examples, after the grid solve, velocities are transferred back to particles for them to perform the advection step. Interpolation functions are required for both of transfers. From a finite element view, the Eulerian grid is the computational mesh while particles act as quadrature points. In some instances, the interpolation functions are defined over grid nodes.

In some embodiments, discretization is the process of transferring continuous functions, models, variables, and equations into discrete form. This process is usually carried out as a step of making the elastoplastic media suitable for numerical evaluation and implementation on computers. In order to solve continuous models, a computational domain should be discretized in a discrete manner and the equations should be solved at points in the domain. There are two ways to discretize the domain. The discrete elements such as mesh or unstructured particles are attached to the fluid and move with the fluid velocity in the Lagrangian approach. The domain is voxelized into fixed discrete elements and fluid is free to move between the discrete elements in the Eulerian approach, for example, fluid properties are tracked at nodes at cell centers or between cells.

In some embodiments, the corresponding snow smoke during avalanche, and spray during waterfall are modeled as fluid using a semi-staggered Eulerian grid and/or advection-projection method. In some examples, a fluid projection method operates as a two-stage fractional step scheme, and uses multiple calculation steps for each numerical time-step to numerically solve time-dependent incompressible fluid-flow problems. In some embodiments, in a first predictor step, using a suitable advection method, the system is progressed in time to a mid-time-step position, solving transport equations for mass and momentum. In the first step, an initial projection may be implemented such that the mid-time-step velocity field is enforced as divergence free. In a second corrector step then progressed, the time-centered estimates of the velocity, density, etc. are used to form final time-step state. The divergence restraint on the velocity field is enforced in a then applied projection and the system has now been updated to the new time. In some examples, variables are collocated to reduce the partial differential equations (PDEs) to separate scalar equations but every other time step is staggered by half a grid cell. The staggering allows central differences to be used without concerns about stability. With the collocated grid, all variables (transport properties) are located on the same point of the grid.

In some embodiments, several multiscale components are used to integrate the MPM and the advection-projection method simulation systems into one system.

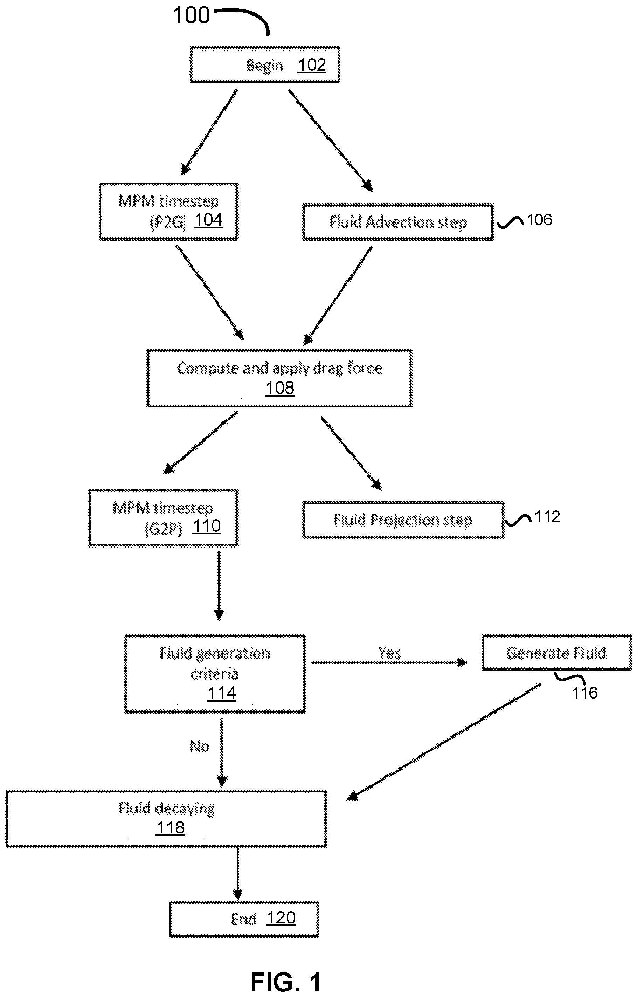

Figure 1 illustrates the workflow 100 of a multiscale time stepping method for simulating avalanche of elastoplastic media, in accordance with some implementations of the present disclosure. At the beginning 102 of the time stepping method, the method completes the MPM Particle to Grid (P2G) time step 104 and the fluid advection step 106 separately. In the P2G time step 104, the particle quantities are transferred to the grid. In some embodiments, a weight function is used in the transfer of the quantities, for example, each particle contributes mass and momentum to a particular voxel in the grid proportional to its distance from the grid cell. In particular, this step computes grid mass and momentum. In some embodiments, the fluid advection step 106 utilizes an advection-project scheme with a matrix-free geometric-multigrid-preconditioned conjugate gradient (GMGPCG) solver, MarCormack advection, and/or advection-reflection scheme for simulating smoke or spray. In some embodiments, data smoothing is a method for processing one- or two-dimensional covariates. The extension to multiple covariates requires exponentially increasing computational memory and complexity. GMGPCG solver provides a matrix-free implementation of a conjugate gradient (CG) method for the regularized least squares problem resulting from smoothing with multivariate and scattered data. It further provides matrix-free preconditioned versions of the CG-algorithm. The main advantage of GMGPCG solver is that algorithms are performed matrix-free and require a small amount of memory. In some embodiments, MacCormack advection method is a discretization scheme for the numerical solution of hyperbolic partial differential equations in computational fluid dynamics. In some embodiments, in an advection-reflection scheme, the energy-dissipating projection operator applied at the end of a simulation step of an advection-projection method for fluid simulation is replaced by an energy-preserving reflection operator applied at mid-step, which leads to a reduction in energy loss, and in turn yields vastly improved detail-preservation.

In some embodiments, after the completion of the MPM Particle to Grid (P2G) step 104 and the fluid advection step 106, on the Eulerian grid, drag force is computed and applied 108 to the MPM system and the fluid system, respectively. The details on how to compute the drag force 108 are further described below, for example, momentum exchange between the fluid and the elastoplastic media is implemented. In some embodiments, aside from the conversion between the saltation and/or atomization fluid and the elastoplastic media, their momentum also undergoes constant exchange when the two phases share the same physical space. To model the coupling between the two phases in a momentum-conserving manner, a drag force model is adopted. In some embodiments, MPM allows a direct application of drag forces to grid nodes of elastoplastic media. Corresponding to the drag force density in a continuum equation, a drag force model is used in a discrete setting. In some examples, the fluid can take a larger time step than the elastoplastic media. For a fluid time step $\Delta t^{f,n}$ from $t^n$ to $t^{n+1}$, one elastoplastic media timestep is divided into K substeps, i.e. $\sum_{k=1}^{K} \Delta t^{s,nk} = \Delta t^{f,n}$. On grid nodes where fluid and sediment materials are present, drag force density is calculated as

$$\mathbf{f}_i^{sd,n_k} = \frac{1}{2} c_i (\epsilon_i^n)^{-\chi} \rho^f A_i^{s,n_k} |\mathbf{u}_i^{n+1} - \mathbf{v}_i^{n_k}| (\mathbf{u}_i^{n+1} - \mathbf{v}_i^{n_k})$$

where $\epsilon$ is the fluid volume fraction, $\rho^f$ is fluid intrinsic density, u is fluid velocity, v is elastoplastic media velocity, and $f^{sd}$ is the drag force of the fluid on the elastoplastic media. The term $A^{s,nk}$ is the cross-sectional area of an imaginary spherical geometry. Subscript i means the above parameters are on a grid i. $c_i$ denotes the empirical coefficient and $\chi$ denotes the empirical exponent. For high Reynolds number fluids, $c_i = 0.39$ and $\chi = 3.7$. $c_i$ is adjusted for controlling the overall strength of the drag force.

In some embodiments, as the time proceeds from $t^{n0}$ to $t^{nk}$, the total momentum change on the elastoplastic media is $\Delta P_i^{sd,n} = \sum_{k=1}^{K} f_i^{sd,nk} \Delta t^{s,nk}$. To enforce total momentum conservation in the fluid- elastoplastic media system, $f_i^{fd,n} = -\Delta P_i^{sd,n-1}/\Delta t^{f,n}$ when applying the drag force to fluid. As a result $\Delta P_i^{fd,n} = -\Delta P_i^{sd,n-1}$ is always satisfied, for example, any momentum change to the elastoplastic media caused by the drag force should always be negated and applied to the fluid in the upcoming fluid step. $\Delta P_i^{fd,n}$ is momentum change on the fluid.

In some embodiments, after the drag force is computed 108, the method then computes the MPM Grid to Particle (G2P) time step 110 and the fluid projection step 112 separately. In some embodiments, in the G2P time step, new particle velocities are computed and mapped from the grid to the applicable particle. According to the invention, fluid projection or generation from elastoplastic media is implemented. As the elastoplastic media interact with the surrounding air, the media's surface experiences saltation and/or atomization, where individual particles of the media are separated from the majority of the media and are carried away by the wind. A mathematical model of the saltation/atomization the process is implemented as:

$$Q = C_g \frac{C_{trans}\rho_{air} v_t}{||\boldsymbol{v}_{media}|| g} (||\boldsymbol{v}_{media}||^2 - v_t^2)$$

where Q is the transport rate $(g \cdot cm^{-1} \cdot s^{-1})$, $C_g$ is a controlling scalar for easy artistic control, $C_{trans}$ is a transition constant that is measured to be $680 \ cm \cdot s^{-1}$, $\rho_{air}$ is the density of the air, $v_t$ is the velocity threshold, below which there is no saltation/atomization, $v_{media}$ is the velocity of the elastoplastic media, and g is the size of the gravity acceleration. The saltation/atomization fluid is introduced to the simulation system by increasing the density of fluid according to the transport rate.

In some embodiments, the model above only applies to the portion of the elastoplastic media near the surface. The surface of the elastoplastic media is identified by observing that in the MPM algorithm, the locations of the surface of the elastoplastic media receives a smaller mass during the particle to grid transfer. Saltation or atomization is never induced in the interior of the media. In addition, since the saltation/atomization fluid's density is significantly lower than that of the elastoplastic media, the mass loss of the elastoplastic media is negligible.

Next, if the fluid generation criteria 114 introduced in the above model is satisfied, additional fluid flow is introduced to the system in the generating fluid step 116. After that, the fluid decaying scheme 118 discussed below is used to model the fluid conversion to elastoplastic media. The fluid decaying scheme 118 is introduced when the fluid generation criteria 114 is not satisfied or no longer satisfied after the generating fluid step 116. After the fluid decaying scheme 118 is processed, the end 120 of the time stepping method is reached.

In modeling the fluid conversion to elastoplastic media process, after the initial phase of transition, the kinetic energy of the saltation/atomization fluid is dissipated. Eventually, particles of the elastoplastic media carried by the wind fall onto the surface of the bulk media and get homogenized. For the same reason that mass loss is not modeled during transition, the mass gain is not modeled in this reverse transition process. Instead, in some embodiments, the decaying of the saltation/atomization fluid is explicitly modeled using an exponential decay scheme.

In some embodiments, parallelization is implemented in the systems and methods disclosed herein. Since the saltation/atomization, the decaying, and the coupling processes are entirely local, each grid node's operation can be executed independently and parallelized trivially.

In some embodiments, the multiscale simulation disclosed herein utilizing the MPM-based elastoplasticity solver and the fluid solver can be implemented on the multi-threaded CPU or GPU on a single or multiple machines. In some experiment, the method was tested successfully on a single NVIDIA GeForce RTX 3060Ti GPU.

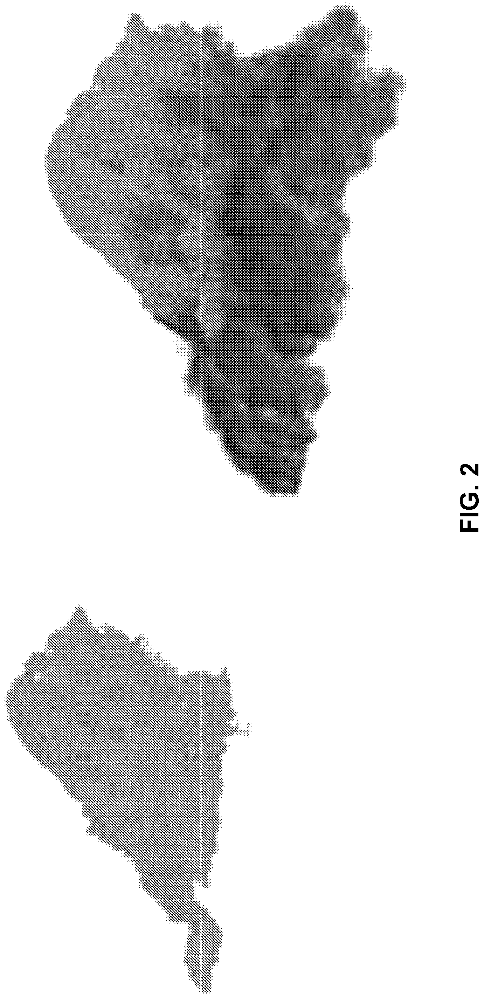

The multiscale phenomena simulation systems and methods disclosed herein have many advantages. Traditionally, avalanche, waterfall, and landslide have primarily been modeled by artists with limited effects. When, where, and how much fluid is generated are entirely directed at the artist's direction. The physics-based model introduced herein provides automation to the generation of the entire multiscale effects. Figure 2 to Figure 5 demonstrate the ability of the systems and methods disclosed herein to model the multiscale phenomena of avalanche and waterfall.

Figure 2 illustrates simulation result comparison reflecting the advantages of the saltation fluid generation scheme (See also steps 114 and 116 in Figure 1), in accordance with some implementations of the present disclosure. In Figure 2, the snow only avalanche simulation is shown on the left, and an avalanche simulation with both snow and snow smoke disclosed in the present multiscale simulation model is shown on the right. Snow smoke is automatically generated using the current approach disclosed in steps 114 and 116 of Figure 1.

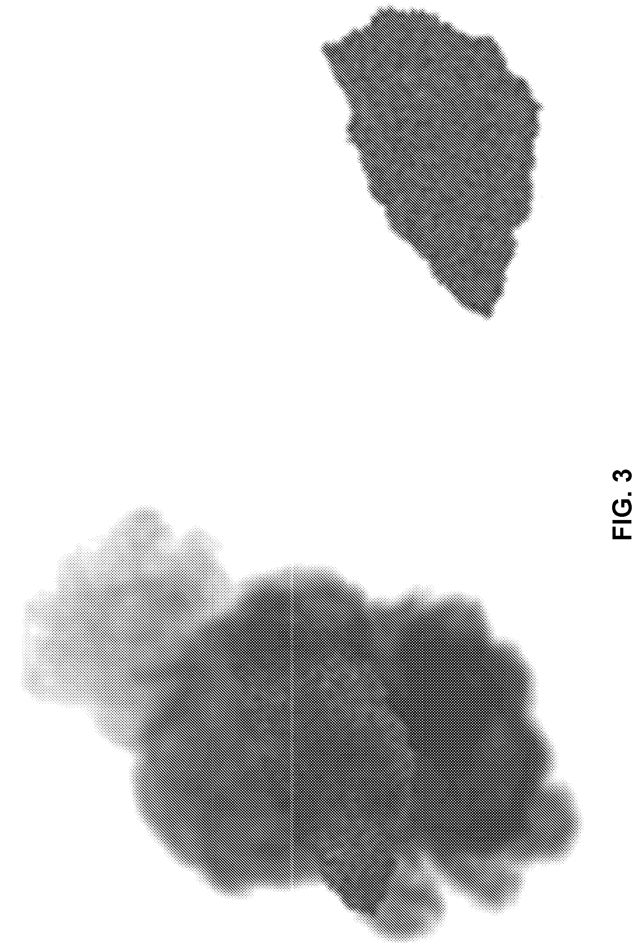

Figure 3 illustrates simulation result comparison reflecting the advantages of the fluid-decaying scheme (See also step 118 in Figure 1), in accordance with some implementations of the present disclosure. In Figure 3, the simulation without conversion of snow smoke to snow via decaying is shown on the left. From the left simulation of Figure 3, the snow smoke lingers unphysically even after the snow comes to an entire rest. In contrast, the multiscale simulation with the decaying regime as discussed in step 118 of Figure 1 is shown on the right of Figure 3. From the right simulation of Figure 3, the snow smoke naturally disappears after the snow comes to a complete stop.

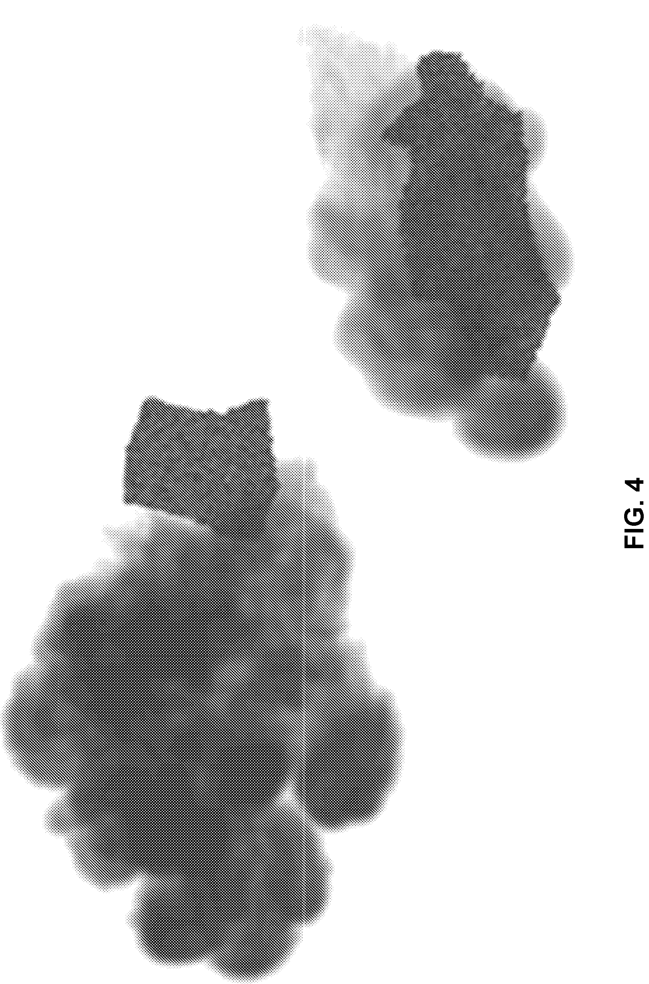

Figure 4 illustrates simulation result comparison reflecting the advantages of the coupling scheme (See also step 108 in Figure 1), in accordance with some implementations of the present disclosure. In Figure 4, the simulation without the snow-smoke drag force is shown on the left. From the left simulation of Figure 4, the snow smoke passes through the snow with no influence. In contrast, the multiscale simulation with the snow-smoke drag force as discussed in step 108 of Figure 1 is shown on the right of Figure 4. From the right simulation of Figure 4, the snow smoke naturally causes a large plastic deformation in the snow.

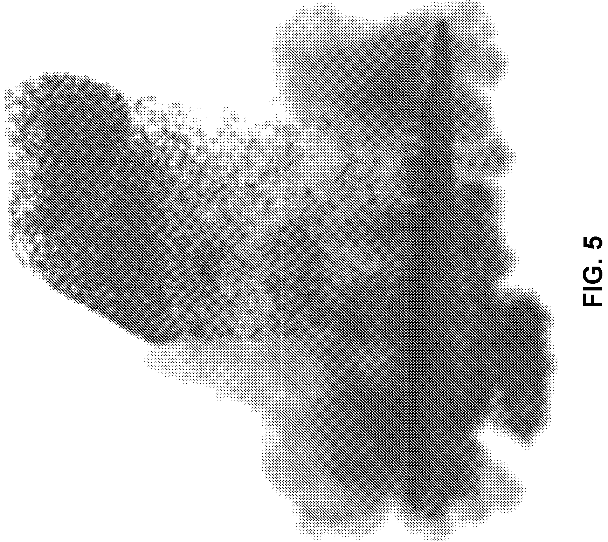

Figure 5 illustrates simulation result of waterfall effects modeled using the multiscale approach discussed in Figure 1, in accordance with some implementations of the present disclosure.

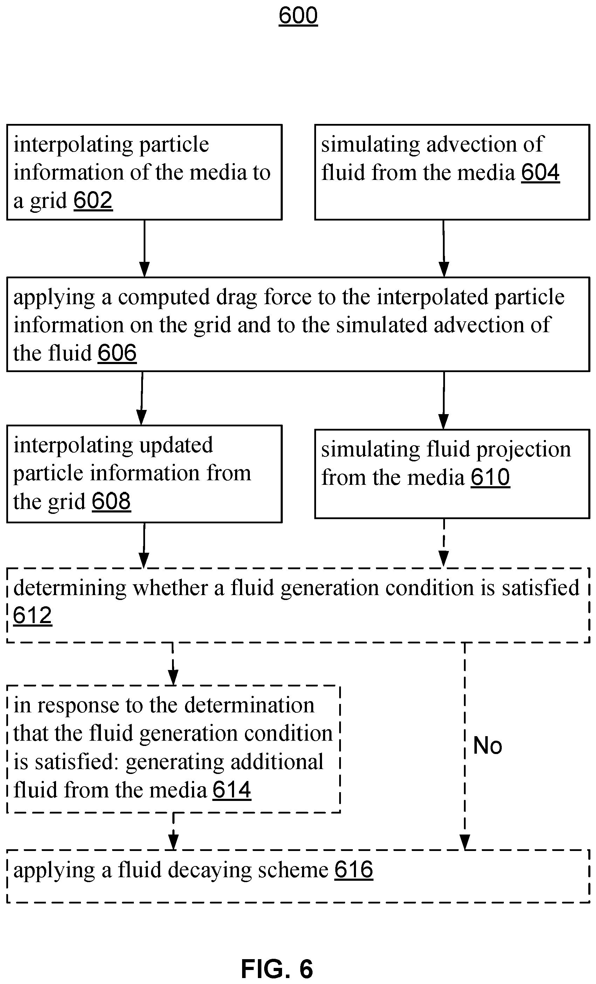

Figure 6 is a block diagram illustrating an exemplary process 600 of simulating visual effect of avalanche of media in accordance with some implementations of the present disclosure.

The process 600 of simulating visual effect of avalanche of media includes a step 602 of interpolating particle information of the media to a grid.

The process 600 includes a step 604 of simulating advection of fluid from the media.

The process 600 then includes a step 606 of applying a computed drag force to the interpolated particle information on the grid and to the simulated advection of the fluid.

The process 600 additionally includes a step 608 of interpolating updated particle information from the grid.

The process 600 additionally includes a step 610 of simulating fluid projection from the media.

In some embodiments, the process 600 further includes a step 612 of determining whether a fluid generation condition is satisfied; in response to the determination that the fluid generation condition is satisfied: the process 600 also includes a step 614 of generating additional fluid from the media; and a step 616 of applying a fluid decaying scheme.

In some embodiments, the step 606 of applying the computed drag force to the interpolated particle information on the grid and to the simulated advection of the fluid includes: coupling the media and the fluid in a momentum-conserving manner, such as the step 108 of the momentum exchange between the fluid and the elastoplastic media described in Figure 1.

In some embodiments, the step 610 of simulating fluid projection from the media includes: generating saltation or atomization fluid from a surface of the media according to a transport rate of the media, such as the steps 114 and 116 of fluid generation from elastoplastic media described in Figure 1.

In some embodiments, the step 602 of interpolating the particle information of the media to the grid is separate from the step 604 of simulating the advection of the fluid from the media.

In some embodiments, the step 602 of interpolating the particle information of the media to the grid is a time step according to a material point method (MPM).

In some embodiments, the grid is a Eulerian grid.

In some embodiments, the step 608 of interpolating the updated particle information from the grid is a time step according to a material point method (MPM).

In some embodiments, the step 612 of determining whether the fluid generation condition is satisfied is according to a velocity threshold of the media, such as the step 114 of fluid generation from elastoplastic media described in Figure 1.

In some embodiments, the fluid decaying scheme in step 616 is a modeling of a process of converting the fluid into the media, such as step 118 of fluid conversion into elastoplastic media described in Figure 1.

In some embodiments, executing operation of each node of the grid independently in parallel. For example, because the saltation/atomization, the decaying, and the coupling processes are entirely local, each grid node's operation can be executed independently and parallelized trivially.

In some embodiments, a sparse data structure is implemented for the method of simulating the visual effect of avalanche of the media. For example, the implementation is built on the sparse data structure, which enables a much more efficient memory usage and therefore this tool allows the users to conduct simulations on a much larger scale than previous methods.

Further embodiments also include various subsets of the above embodiments combined or otherwise re-arranged in various other embodiments.

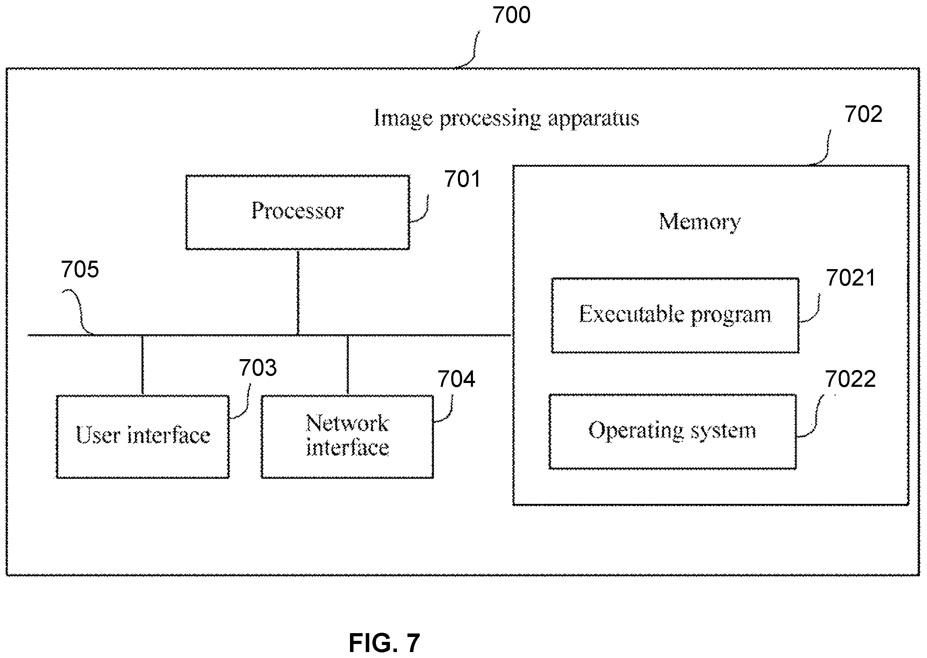

Herein, an image processing apparatus of the embodiments of the present application is implemented with reference to descriptions of accompanying drawings. The image processing apparatus may be implemented in various forms, for example, different types of computer devices such as a server or a terminal (for example, a desktop computer, a notebook computer, or a smartphone). A hardware structure of the image processing apparatus of the embodiments of the present application is further described below. It may be understood that Figure 7 merely shows an exemplary structure, rather than all structures, of the image processing apparatus, and a partial or entire structure shown in Figure 7 may be implemented according to requirements.

Referring to Figure 7, Figure 7 is a schematic diagram of an optional hardware structure of an image processing apparatus according to an embodiment of the present application, and in an actual application, may be applied to the server or various terminals running an application program. An image processing apparatus 700 shown in Figure 7 includes: at least one processor 701, a memory 702, a user interface 703, and at least one network interface 704. Components in the image processing apparatus 700 are coupled together by means of a bus system 705. It may be understood that the bus 705 is configured to implement connection and communication between the components. The bus system 705, besides including a data bus, may further include a power bus, a control bus, and a status signal bus. However, for a purpose of a clear explanation, all buses are marked as the bus system 705 in Figure 7.

The user interface 703 may include a display, a keyboard, a mouse, a trackball, a click wheel, a key, a button, a touchpad, a touchscreen, or the like.

It may be understood that the memory 702 may be a volatile memory or a non-volatile memory, or may include both a volatile memory and a non-volatile memory.

The memory 702 in the embodiments of the present application is configured to store different types of data to support operations of the image processing apparatus 700. Examples of the data include: any computer program, such as an executable program 7021 and an operating system 7022, used to perform operations on the image processing apparatus 700, and a program used to perform the image processing method of the embodiments of the present application may be included in the executable program 7021.

The image processing method disclosed in the embodiments of the present application may be applied to the processor 701, or may be performed by the processor 701. The processor 701 may be an integrated circuit chip and has a signal processing capability. In an implementation process, each step of the image processing method may be completed by using an integrated logic circuit of hardware in the processor 701 or an instruction in a software form. The foregoing processor 701 may be a general-purpose processor, a digital signal processor (DSP), another programmable logic device, a discrete gate, a transistor logic device, a discrete hardware component, or the like. The processor 701 may implement or execute methods, steps, and logical block diagrams provided in the embodiments of the present application. The general purpose processor may be a microprocessor, any conventional processor, or the like. The steps in the method provided in the embodiments of the present application may be directly performed by a hardware decoding processor, or may be performed by combining hardware and software modules in a decoding processor. The software module may be located in a storage medium. The storage medium is located in the memory 702. The processor 701 reads information in the memory 702 and performs steps of the image processing method provided in the embodiments of the present application by combining the information with hardware thereof.

In some embodiments, simulating the visual effect of avalanche of the media can be accomplished on a group of servers or a cloud on a network.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media that is non-transitory or (2) a communication medium such as a signal or carrier wave. Data storage media may be any available media that can be accessed by one or more computers or one or more processors to retrieve instructions, code and/or data structures for implementation of the implementations described in the present application. A computer program product may include a computer-readable medium.

The terminology used in the description of the implementations herein is for the purpose of describing particular implementations only and is not intended to limit the scope of claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, elements, and/or components, but do not preclude the presence or addition of one or more other features, elements, components, and/or groups thereof.

It will also be understood that, although the terms first, second, etc. may be used herein to describe various elements, these elements should not be limited by these terms. These terms are only used to distinguish one element from another. For example, a first electrode could be termed a second electrode, and, similarly, a second electrode could be termed a first electrode, without departing from the scope of the implementations. The first electrode and the second electrode are both electrodes, but they are not the same electrode.

The description of the present application has been presented for purposes of illustration and description, and is not intended to be exhaustive or limited to the invention in the form disclosed. Many modifications, variations, and alternative implementations will be apparent to those of ordinary skill in the art having the benefit of the teachings presented in the foregoing descriptions and the associated drawings. The embodiment was chosen and described in order to best explain the principles of the invention, the practical application, and to enable others skilled in the art to understand the invention for various implementations and to best utilize the underlying principles and various implementations with various modifications as are suited to the particular use contemplated.

## Claims

1. A computer-implemented method of rendering visual effect of avalanche of elastoplastic media, comprising:

   interpolating (602) particle information of the media to a grid;
   simulating (604) advection of fluid from the media;
   applying (606) a computed drag force to the interpolated particle information on the grid and to the simulated advection of the fluid;
   interpolating (608) updated particle information from the grid;
   simulating fluid projection from the media; and
   rendering an image comprising the simulated fluid projection,
   **characterized in that**, simulating the fluid projection from the media comprises:
   generating saltation or atomization fluid from interaction of the media with surrounding air at a surface of the media according to a transport rate of the media, wherein the generating of the saltation or atomization fluid is implemented as:

$$Q = C_g \frac{C_{trans}\rho_{air}v_t}{||\boldsymbol{v}_{media}||g}(||\boldsymbol{v}_{media}||^2 - v_t^2)$$

   where Q is the transport rate ($g \cdot cm^{-1} \cdot s^{-1}$), $C_g$ is a controlling scalar for easy artistic control, $C_{trans}$ is a transition constant that is measured to be 680 cm $\cdot$ $s^{-1}$, $\rho_{air}$ is the density of the air, $v_t$ is the velocity threshold, below which there is no saltation/atomization, $v_{media}$ is the velocity of the elastoplastic media, and $g$ is the size of the gravity acceleration, and wherein the saltation or atomization fluid is introduced by increasing the density of fluid according to the transport rate, wherein the generating of the saltation or atomization fluid is performed locally and parallelized on each grid node.

2. The computer-implemented method according to claim 1, further comprising:

   determining (612) whether a fluid generation condition is satisfied;
   in response to the determination that the fluid generation condition is satisfied: generating (614) additional fluid from the media; and
   applying (616) a fluid decaying scheme.

3. The computer-implemented method according to claim 1, wherein applying the computed drag force to the interpolated particle information on the grid and to the simulated advection of the fluid comprises:
   coupling the media and the fluid in a momentum-conserving manner.

4. The computer-implemented method according to claim 1, wherein interpolating the particle information of the media to the grid is separate from simulating the advection of the fluid from the media.

5. The computer-implemented method according to claim 1, wherein interpolating the particle information of the media to the grid is a time step according to a material point method, MPM.

6. The computer-implemented method according to any one of claims 1 to 5, wherein the grid is a Eulerian grid.

7. The computer-implemented method according to claim 1, wherein interpolating the updated particle information from the grid is a time step according to a material point method, MPM.

8. The computer-implemented method according to claim 1, wherein determining whether the fluid generation condition is satisfied is according to a velocity threshold of the media.

9. The computer-implemented method according to claim 1, wherein the fluid decaying scheme is a modeling of a process of converting the fluid into the media.

10. The computer-implemented method according to claim 1, wherein a sparse data structure is implemented.

11. An electronic apparatus comprising one or more processing units, memory coupled to the one or more processing units, and a plurality of programs stored in the memory that, when executed by the one or more processing units, cause the electronic apparatus to perform the computer-implemented method of rendering visual effect of avalanche of media according to any one of claims 1 to 10.

12. A non-transitory computer readable storage medium storing a plurality of programs for execution by an electronic apparatus having one or more processing units, wherein the plurality of programs, when executed by the one or more processing units, cause the electronic apparatus to perform the computer-implemented method of rendering visual effect of avalanche of media according to any one of claims 1 to 10.

**Patentansprüche**

1. Computerimplementiertes Verfahren zum Rendern eines visuellen Lawineneffekts von elastoplastischen Medien, umfassend:

   Interpolieren (602) von Partikelinformationen der Medien auf ein Gitter;
   Simulieren (604) von Advektion von Fluid von den Medien;
   Anwenden (606) einer berechneten Widerstandskraft auf die interpolierten Partikelinformationen auf dem Gitter und auf die simulierte Advektion des Fluids;
   Interpolieren (608) aktualisierter Partikelinformationen von dem Gitter;
   Simulieren von Fluidprojektion von den Medien; und
   Rendern eines Bildes, das die simulierte Fluidprojektion umfasst,
   **dadurch gekennzeichnet, dass** das Simulieren der Fluidprojektion von den Medien umfasst:

   Erzeugen von Saltations- oder Atomisierungsfluid von Interaktion der Medien mit Umgebungsluft an einer Oberfläche der Medien gemäß einer Transportrate der Medien, wobei das Erzeugen des Saltations- oder Atomisierungsfluids implementiert wird als:

$$Q = C_g \frac{C_{trans}\rho_{air}v_t}{\|v_{media}\|g}(\|v_{media}\|^2 - v_t^2)$$

   wobei Q die Transportrate (g · cm$^{-1}$ · s$^{-1}$) ist, $C_g$ ein Steuerungsskalar zur einfachen künstlerischen Steuerung ist, $C_{trans}$ eine Übergangskonstante ist, die als 680 cm · s$^{-1}$ gemessen wird, $\rho_{air}$ die Dichte der Luft ist, $v_t$ der Geschwindigkeitsschwellenwert ist, unter dem keine Saltation/Atomisierung erfolgt, $v_{media}$ die Geschwindigkeit der elastoplastischen Medien ist und g die Größe der Erdbeschleunigung ist und wobei das Saltations- oder Atomisierungsfluid durch Erhöhen der Dichte von Fluid gemäß der Transportrate eingeführt wird, wobei das Erzeugen des Saltations- oder Atomisierungsfluids lokal und parallelisiert auf jedem Gitterknoten durchgeführt wird.

2. Computerimplementiertes Verfahren nach Anspruch 1, ferner umfassend:

Bestimmen (612), ob eine Fluiderzeugungsbedingung erfüllt ist;
als Reaktion auf das Bestimmen, dass die Fluiderzeugungsbedingung erfüllt ist: Erzeugen (614) zusätzlichen Fluids von den Medien; und
Anwenden (616) eines Fluidabklingschemas.

3. Computerimplementiertes Verfahren nach Anspruch 1, wobei das Anwenden der berechneten Widerstandskraft auf die interpolierten Partikelinformationen auf dem Gitter und auf die simulierte Advektion des Fluids umfasst: Koppeln der Medien und des Fluids auf eine momentbewahrende Weise.

4. Computerimplementiertes Verfahren nach Anspruch 1, wobei das Interpolieren der Partikelinformationen der Medien auf das Gitter getrennt vom Simulieren der Advektion des Fluids von den Medien erfolgt.

5. Computerimplementiertes Verfahren nach Anspruch 1, wobei das Interpolieren der Partikelinformationen der Medien auf das Gitter ein Zeitschritt gemäß einer Materialpunktmethode, MPM, ist.

6. Computerimplementiertes Verfahren nach einem der Ansprüche 1 bis 5, wobei das Gitter ein Eulersches Gitter ist.

7. Computerimplementiertes Verfahren nach Anspruch 1, wobei das Interpolieren der aktualisierten Partikelinformationen von dem Gitter ein Zeitschritt gemäß einer Materialpunktmethode, MPM, ist.

8. Computerimplementiertes Verfahren nach Anspruch 1, wobei das Bestimmen, ob die Fluiderzeugungsbedingung erfüllt ist, gemäß einem Geschwindigkeitsschwellenwert der Medien erfolgt.

9. Computerimplementiertes Verfahren nach Anspruch 1, wobei das Fluidabklingschema ein Modellieren eines Prozesses des Umwandelns des Fluids in die Medien ist.

10. Computerimplementiertes Verfahren nach Anspruch 1, wobei eine dünn besetzte Datenstruktur implementiert wird.

11. Elektronische Vorrichtung, die eine oder mehrere Verarbeitungseinheiten, Speicher, der an die eine oder mehreren Verarbeitungseinheiten gekoppelt ist, und eine Vielzahl von Programmen umfasst, die in dem Speicher gespeichert sind und die, wenn sie von der einen oder den mehreren Verarbeitungseinheiten ausgeführt werden, die elektronische Vorrichtung veranlassen, das computerimplementierte Verfahren zum Rendern eines visuellen Lawineneffekts von Medien nach einem der Ansprüche 1 bis 10 durchzuführen.

12. Nichtflüchtiger maschinenlesbarer Datenträger, der eine Vielzahl von Programmen zur Ausführung durch eine elektronische Vorrichtung speichert, die eine oder mehrere Verarbeitungseinheiten aufweist, wobei die Vielzahl von Programmen, wenn sie von der einen oder den mehreren Verarbeitungseinheiten ausgeführt werden, die elektronische Vorrichtung veranlassen, das computerimplementierte Verfahren zum Rendern eines visuellen Lawineneffets von Medien nach einem der Ansprüche 1 bis 10 durchzuführen.

**Revendications**

1. Procédé informatisé pour rendre l'effet visuel d'une avalanche d'un milieu élasto-plastique, comprenant :

l'interpolation (602) d'informations de particules du milieu sur une grille ;
la simulation (604) de l'advection de fluide à partir du milieu ;
l'application (606) d'une force de traînée calculée aux informations de particules interpolées sur la grille et à l'advection simulée du fluide ;
l'interpolation (608), depuis la grille, d'informations de particules mises à jour ;
la simulation d'une projection de fluide à partir du milieu ; et
le rendu d'une image comprenant la projection de fluide simulée,
**caractérisé en ce que** la simulation de la projection de fluide à partir du milieu comprend :

la génération de fluide de saltation ou d'atomisation à partir de l'interaction du milieu avec l'air environnant au niveau d'une surface du milieu en fonction de la vitesse de transport du milieu, laquelle génération du fluide de saltation ou d'atomisation est implémentée sous la forme :

$$Q = C_g \frac{C_{trans} \rho_{air} v_t}{\|v_{media}\| g} (\|v_{media}\|^2 - v_t^2)$$

où $Q$ est la vitesse de transport (g · cm$^{-1}$ · s$^{-1}$), $C_g$ est le scalaire de commande pour un contrôle artistique aisé, $C_{trans}$ est la constante de transition qui est mesurée comme étant de 680 cm · s$^{-1}$, $\rho_{air}$ est la densité de l'air, $v_t$ est le seuil de vitesse en-deçà duquel il n'y a pas de saltation/atomisation, $v_{media}$ est la vélocité du milieu élasto-plastique, et $g$ est l'ampleur de l'accélération gravitationnelle, et dans lequel le fluide de saltation ou d'atomisation est introduit par augmentation de la densité de fluide en fonction de la vitesse de transport, dans lequel la génération du fluide de saltation ou d'atomisation est effectuée localement et mise en parallèle sur chaque nœud de grille.

2. Procédé informatisé selon la revendication 1, comprenant en outre :

la détermination (612) qu'une condition de génération de fluide est ou non satisfaite ;
en réponse à la détermination que la condition de génération de fluide est satisfaite :

la génération (614) de fluide supplémentaire à partir du milieu ; et
l'application (616) d'un schéma de déclin du fluide.

3. Procédé informatisé selon la revendication 1, dans lequel l'application de la force de traînée calculée aux informations de particules interpolées sur la grille et à l'advection simulée du fluide comprend :
le couplage du milieu et du fluide de manière que l'impulsion soit conservée.

4. Procédé informatisé selon la revendication 1, dans lequel l'interpolation des informations de particules du milieu sur la grille est séparée de la simulation de l'advection du fluide à partir du milieu.

5. Procédé informatisé selon la revendication 1, dans lequel l'interpolation des informations de particules du milieu sur la grille est une étape temporelle selon une méthode par points matériels, MPM.

6. Procédé informatisé selon l'une quelconque des revendications 1 à 5, dans lequel la grille est une grille eulérienne.

7. Procédé informatisé selon la revendication 1, dans lequel l'interpolation des informations de particules mises à jour depuis la grille est une étape temporelle selon une méthode par points matériels, MPM.

8. Procédé informatisé selon la revendication 1, dans lequel la détermination que la condition de génération de fluide est ou non satisfaite est effectuée en fonction du seuil de vélocité du milieu.

9. Procédé informatisé selon la revendication 1, dans lequel le schéma de déclin du fluide est une modélisation d'un processus de conversion du fluide en le milieu.

10. Procédé informatisé selon la revendication 1, dans lequel une structure de données éparse est implémentée.

11. Appareil électronique comprenant une ou plusieurs unités de traitement, une mémoire couplée aux une ou plusieurs unités de traitement, et une pluralité de programmes stockés dans la mémoire qui, lorsqu'ils sont exécutés par les une ou plusieurs unités de traitement, amènent l'appareil électronique à exécuter le procédé informatisé de rendu d'un effet visuel d'avalanche de milieu selon l'une quelconque des revendications 1 à 10.

12. Support de stockage lisible par ordinateur non transitoire stockant une pluralité de programmes pour une exécution par un appareil électronique ayant une ou plusieurs unités de traitement, dans lequel la pluralité de programmes, lorsqu'elle est exécutée par les une ou plusieurs unités de traitement, amène l'appareil électronique à exécuter le procédé informatisé de rendu d'un effet visuel d'avalanche de milieu selon l'une quelconque des revendications 1 à 10.

100

Begin  102

MPM timestep (P2G) 104

Fluid Advection step  106

Compute and apply drag force 108

MPM timestep (G2P) 110

Fluid Projection step  112

Fluid generation criteria 114 —— Yes ——→ Generate Fluid 116

No

Fluid decaying 118

End 120

**FIG. 1**

FIG. 2

FIG. 3

FIG. 4

FIG. 5

## 600

| interpolating particle information of the media to a grid 602 | simulating advection of fluid from the media 604 |

↓ ↓

applying a computed drag force to the interpolated particle information on the grid and to the simulated advection of the fluid 606

↓ ↓

| interpolating updated particle information from the grid 608 | simulating fluid projection from the media 610 |

↓ ↓

determining whether a fluid generation condition is satisfied 612

↓ | No

in response to the determination that the fluid generation condition is satisfied: generating additional fluid from the media 614

↓ ↓

applying a fluid decaying scheme 616

## FIG. 6

**FIG. 7**

EP 4 275 177 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8878856 B1